(19) Europäisches Patentamt
European Patent Office
Office européen des brevets

(11) **EP 2 477 139 A2**

(12) **EUROPEAN PATENT APPLICATION**

(43) Date of publication:
**18.07.2012 Bulletin 2012/29**

(51) Int Cl.:
*G06K 9/00* *(2006.01)*   *G06K 9/46* *(2006.01)*

(21) Application number: **11275164.9**

(22) Date of filing: **21.12.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **21.12.2010 KR 20100131452**

(71) Applicant: **Samsung Electro-Mechanics Co., Ltd.
Gyunggi-do (KR)**

(72) Inventors:
• **Kim, Gyu Won
Gyeonggi-do 443-756 (KR)**

• **Park, Sang Hyun
Gyeonggi-do 443-740 (KR)**
• **Kim, Joo Hyun
Gyeonggi-do 445-752 (KR)**

(74) Representative: **Powell, Timothy John
Potter Clarkson LLP
Patents
Park View House
58 The Ropewalk
Nottingham Nottinghamshire NG1 5DD (GB)**

(54) **Lane departure warning system and method**

(57)      A lane departure warning system and method is provided. The lane departure warning system includes an image sensing unit, an edge extracting unit, a lane recognizing unit, a lane type determining unit, a lane color detecting unit, a lane pattern generating unit, and a lane departure determining unit. The image sensing unit is configured to sense a plurality of images continuously photographed by a camera. The edge extracting unit is configured to emphasize edge components necessary for lane recognition from the image inputted by the image sensing unit and extract the emphasized edge components. The lane recognizing unit is configured to detect straight-line components from the extracted edge components and recognize the detected straight-line components as a lane. The lane type determining unit is configured to determine a type of the lane using the recognized lane. The lane color detecting unit is configured to detect a color of the lane from an image signal value inputted by the image sensing unit. The lane pattern generating unit is configured to generate a lane pattern according to the lane shown on a display, based on the type and the color of the recognized lane. The lane departure determining unit is configured to determine lane departure in consideration of the type and the color of the lane and a state of a turn signal lamp.

[FIG. 1]

EP 2 477 139 A2

**Description**

CROSS-REFERENCE TO RELATED APPLICATIONS

This application claims the benefit of Korean Patent Application No. 10-2010-0131452 filed with the Korea Intellectual Property Office on December 21, 2010 the disclosure of which is incorporated herein by reference.

BACKGROUND OF THE INVENTION

1. Field of the Invention

The present invention relates to a lane departure warning system and method, and more particularly, to a lane departure warning system and method, which determines lane departure by recognizing the types and colors of lanes.

2. Description of the Related Art

Advanced Safety Vehicles (ASV) employ high electronic technology and control technology to improve safety of vehicles, increase traffic volume by reducing traffic accidents, save energy, and facilitate a driver's convenience.
As an example of ASV, a Lane Departure Warning System (LDWS) is a safety apparatus that analyzes images of forward roads using cameras attached on vehicles to detect a currently driving lane and then generates a warning sound when a vehicle is departing from a lane due to carelessness or dozing-off during driving. Such an LDWS includes a lane detection apparatus that analyzes an image signal of the front side of a vehicle to determine whether a vehicle departs from the lane, and a warning apparatus that warns a driver of lane departure when a vehicle is departing from the lane.
However, since a typical lane departure warning system is designed to recognize a lane with respect to edge components existing in all images inputted from a camera, the possibility of recognizing a lane is low, and the operation process is complicated.
Also, a typical lane departure warning system does not distinguish between solid lines and centerlines inhibiting a lane change and dotted lines allowing a lane change, causing confusion to drivers. That is, e typical lane departure warning system may not determine the type of a lane. Accordingly, if a turn signal lamp is determined to be on, although a vehicle approaches a solid line, the system may not recognize it as an abnormal situation. In this case, the system does not issue any warning to a driver, which may cause a traffic accident.

SUMMARY OF THE INVENTION

The present invention has been invented in order to overcome the above-described problems and it is, therefore, an object of the present invention to provide a lane departure warning system and method, which has high lane recognition accuracy and issues a warning to a driver even when a vehicle moves out of a solid line. The lane departure warning system includes a system configured to set a region so as to recognize a lane with respect to a region where the lane is likely to exist, and a system configured to recognize the type and color of the lane.
In accordance with one aspect of the present invention to achieve the object, there is provided a lane departure warning system, which includes: an image sensing unit configured to sense a plurality of images continuously photographed by a camera; an edge extracting unit configured to emphasize edge components necessary for lane recognition from the image inputted by the image sensing unit and extract the emphasized edge components; a lane recognizing unit configured to detect straight-line components from the extracted edge components and recognize the detected straight-line components as a lane; a lane type determining unit configured to determine a type of the lane using the recognized lane; a lane color detecting unit configured to detect a color of the lane from an image signal value inputted by the image sensing unit; a lane pattern generating unit configured to generate a lane pattern according to the lane shown on a display, based on the type and the color of the recognized lane; and a lane departure determining unit configured to determine lane departure in consideration of the type and the color of the lane and a state of a turn signal lamp.
The lane departure warning system may further include a lane recognition region setting unit configured to set a region necessary for the lane recognition from the edge components extracted by the edge extracting unit before the lane is recognized by the lane recognizing unit.
The lane recognition region setting unit may set a left and right limit line having a certain width to set a left region and a right region, based on edge components regarding a left line and edge components regarding a right line that are extracted by the edge extracting unit.
The lane recognition region setting unit may set an angle limit line at a certain angle or more, based on a horizontal axis with respect to edge components corresponding to the lane.

The lane departure warning system may further include a lane recognition error preventing unit configured to control the lane recognizing unit to again recognize the lane when the lane is incorrectly recognized due to a failure of the lane recognizing unit.

The lane recognition error preventing unit may be configured to obtain widths of the left line and the right line recognized by the lane recognizing unit and compare the widths with a predetermined distance limit line.

The lane departure warning system may further include an image converting unit configured to convert an RGB image inputted by the image sensing unit into an image of a YCbCr color space.

The lane departure warning system may further include a scaling unit configured to perform a down-scaling process to adjust a quality of the image converted by the image converting unit.

The lane departure warning system may further include a cropping unit configured to perform a cropping process on a region of the down-scaled image where the lane exists.

The lane departure warning system may further include a noise removing unit configured to filter components acting as noise during the lane recognition from the image cropped by the cropping unit.

The lane type determining unit may compare a value of an array having a largest value among an accumulation array with a predetermined critical value.

The lane color detecting unit may verify whether the image signal value inputted by the image sensing unit falls within a range of predetermined critical values.

The lane departure warning system may further include an auto white balance applying unit configured to apply auto white balance (AWB) to the image signal value inputted by the image sensing unit before the color of the lane is detected by the lane color detecting unit.

In accordance with another aspect of the present invention to achieve the object, there is provided a lane departure warning method, which includes: (A) sensing a plurality of images continuously photographed by a camera; (B) emphasizing edge components necessary for lane recognition from the image inputted by sensing of the image and extracting the emphasized edge components; (C) detecting straight-line components from the extracted edge components and recognizing the detected straight-line components as a lane; (D) determining a type of the lane using the lane recognized by the recognition of the lane; (E) detecting a color of the lane from an image signal value inputted by sensing of the image; (F) generating a lane pattern according to the lane shown on a display, based on the type and the color of the recognized lane; and (G) determining lane departure in consideration of the type and the color of the lane and a state of a turn signal lamp.

The lane departure warning method may further include setting a region necessary for the lane recognition from the edge components extracted by the extracting of the edge components before the recognizing of the lane.

The lane departure warning method may further include determining whether the lane is incorrectly recognized due to a failure of the lane recognizing unit after the recognizing of the lane.

When it is determined that the lane has been incorrectly recognized, the recognizing of the lane may be performed.

The lane departure warning method may further include converting an RGB image inputted from the camera into an image of a YCbCr color space after the sensing of the plurality of images.

The lane departure warning method may further include performing a down-scaling process to adjust a quality of the image converted by the converting of the RGB image.

The lane departure warning method may further include performing a cropping process on a region of the down-scaled image where the lane exists.

The lane departure warning method may further include filtering components acting as noise during the lane recognition from the cropped image.

BRIEF DESCRIPTION OF THE DRAWINGS

These and/or other aspects and advantages of the present general inventive concept will become apparent and more readily appreciated from the following description of the embodiments, taken in conjunction with the accompanying drawings of which:

FIG. 1 is a view showing a configuration of a lane departure warning system in accordance with to an embodiment of the present invention;

FIG. 2 is a view showing a lane pattern generated on a user's display by a lane pattern generating unit;

FIG. 3 is a view showing an image set as a right region and a left region according to a lane recognition region setting unit;

FIG. 4 is a view showing angle limit lines set to a certain angle or more, based on a horizontal axis with respect to an edge component according to a lane recognition region setting unit;

FIG. 5 is a view showing a distance limit line set by a lane recognition error preventing unit; and

FIG. 6 is a flowchart showing a lane departure warning method using a lane departure warning system in accordance with an embodiment of the present invention.

DETAILED DESCRIPTION OF THE PREFERABLE EMBODIMENTS

Hereinafter, specific embodiments of the present invention will be described with reference to the accompanying drawings. However, the present invention is provided for the illustrative purpose only but not limited thereto.

The objects, features, and advantages of the present invention will be apparent from the following detailed description of embodiments of the invention with references to the following drawings. Descriptions of well-known components and processing techniques are omitted so as not to unnecessarily obscure the embodiments of the present invention. The following terms are defined in consideration of functions of the present invention and may be changed according to users or operator's intentions or customs. Thus, the terms shall be defined based on the contents described throughout the specification.

This invention may be embodied in different forms and should not be construed as limited to the embodiments set forth herein. Rather, these embodiments are provided so that this disclosure will be thorough and complete, and will fully convey the scope of the invention to those skilled in the art.

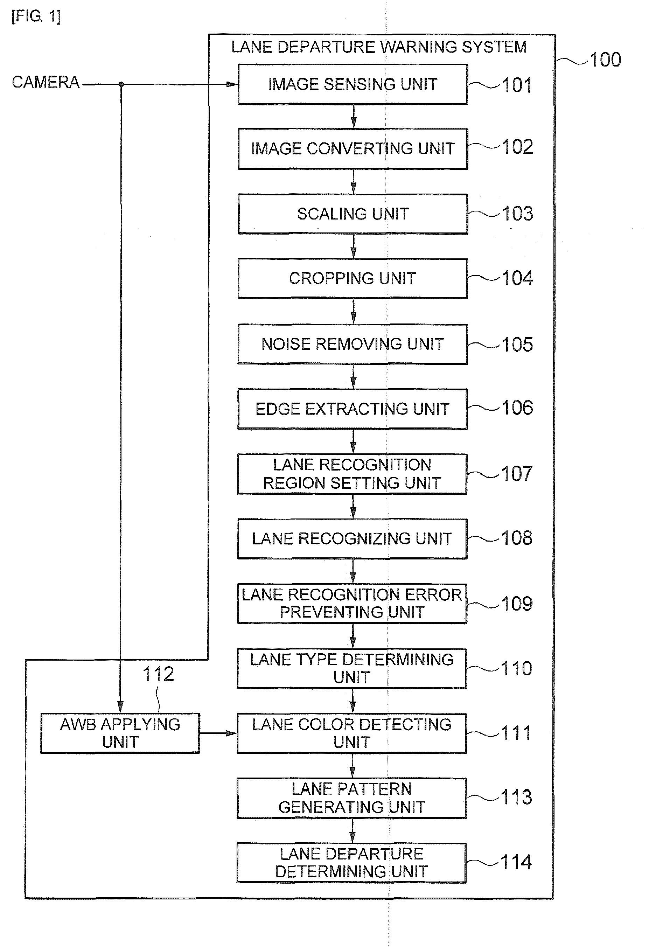

FIG. 1 is a view showing a configuration of a lane departure warning system in accordance with an embodiment of the present invention.

Referring to FIG. 1, a lane departure warning system 100 may include an image sensing unit 101, an edge extracting unit 106, a lane recognizing unit 108, a lane type determining unit 110, a lane color detecting unit 111, a lane pattern generating unit 113, and a lane departure determining unit 114. The image sensing unit 101 is configured to sense a plurality of images continuously photographed by a camera. The edge extracting unit 106 is configured to emphasize edge components necessary for lane recognition and extract the emphasized edge components from the images inputted by the image sensing unit 101. The lane recognizing unit 108 is configured to detect straight-line components from the extracted edge components and recognize the straight-line components as a lane. The lane type determining unit 110 is configured to determine the type of the lane using the recognized lane. The lane color detecting unit 111 is configured to detect the color of the lane using a signal value inputted by the image sensing unit 101. The lane pattern generating unit 113 is configured to generate a lane pattern according to a lane shown on a display using the type and color of the recognized lane. The lane departure determining unit 114 is configured to determine lane departure of a vehicle in consideration of the type and color of the lane and the state of turn signal lamps.

The image sensing unit 101 senses a plurality of images that are continuously photographed by the camera, and may be implemented using a Complementary Metal-Oxide Semiconductor (CMOS) sensor.

The plurality of images inputted from the image sensing unit 101 may be inputted on a frame basis. In this case, the image sensing unit 101 may output images of a first format by performing a CMOS sensing function and a color interpolation function. In this embodiment, the first format may be an RGB image.

The lane departure warning system 100 may further include an image converting unit 102 configured to convert an RGB image inputted from the image sensing unit 101 into an image of a YCbCr color space.

The YCbCr color space is a sort of color space that is used in an image system. Y is a luminance component, and Cb and Cr are chrominance components. YCbCr is not an absolute color space, and it is an RGB information encoding scheme. An actually-displayed color of an image depends on the original RGB information used to display a signal. YCbCr can reduce the amount of data necessary to show chrominance components without a significant reduction of the visual quality, by showing Cr and Cb components without a lower resolution than Y component using a point that a human visual system is less sensitive to color than brightness.

The lane departure warning system 100 may further include a scaling unit 103 configured to perform a down-scaling process to adjust the quality of an image converted by the image converting unit 102.

The scaling unit 103 may perform a variety of down-scaling processes according to scalability with which a scalable image encoder encodes an original image. As an example, the resolution of a screen may be reduced by sub-sampling frames of the original image in the horizontal and vertical directions. As another example, the frame rate of the original image may be reduced by removing a portion of frames from frames constituting the original image. As another example, the bit depth of pixels constituting the original image may be reduced from 8-bit to 6-bit. Thus, down-scaling process of the scaling unit 103 may be performed by various methods according to the scalable image encoding technology, and the scaling unit 103 is not limited to the above-mentioned methods.

Also, the lane departure warning system 100 may further include a cropping unit 104 configured to perform a cropping process on a region of the down-scaled image where a lane exists.

Since a desirable region of interest (ROI) necessary for lane recognition needs to allow a scanned region to be minimized and include the shape of the lane, a cropping process may be performed such that vertical limit lines are set with respect to the image inputted by the image sensing unit 101. Thus, the reason why the cropping process is performed is that when the whole of the inputted image is analyzed, wrong information may be delivered to a user and the operation process may become complicated.

Also, the lane departure warning system 100 may further include a noise removing unit 105 configured to filter components of the cropped image, which may act as noise in lane recognition.

During the acquisition, conversion and transmission of image data, Electromagnetic Interference (EMI) may be generated by an environment of image acquisition and sensibility abnormality of a sensor, which may act as noise in lane departure. In order to remove components acting as noise in lane departure, some noise reduction algorithms such as speckle filtering, average filtering, median filtering, local region filtering, and sigma filtering, may be used, and the noise removing unit 105 is not limited to the above-mentioned methods.

The edge extracting unit 106 extracts edge components necessary for lane recognition from the image inputted by the image sensing unit 101. In order to effectively extract edge components, edge components may be emphasized prior to extraction of edge component.

A method for emphasizing edge components may be performed by histogram analysis. A histogram represents the distribution of brightness of pixels in an image, where the horizontal axis is designated as brightness of an image signal, and the vertical axis is designated as the number of pixels. Histogram stretching is performed using the histogram.

A process of performing histogram stretching can be expressed as Equation (1):

$$P_{out} = \frac{(P_{in} - min)}{(max - min)} \times 255 \qquad \ldots(1)$$

The smallest brightness value in which the number of pixels is not zero is designated as a minimum value (min) at the left portion of the histogram, and the greatest brightness value in which the number of pixels is not zero is designated as a maximum value (max) at the right portion of the histogram. Thereafter, a value obtained by subtracting the minimum value from a current brightness (Pin) is divided by a distribution range (max-min) of the brightness values to obtain a value ranging from 0 to 1, which is multiplied by 255 that is a level range of the brightness value to obtain a histogram having an even distribution in right and left directions. Thus, by re-decomposing the distribution of the brightness values such that the histogram showing the distribution of the brightness value becomes even, an excessively bright or dark image or an image biased to one side may be improved to prevent a rapid variation of brightness.

When edge components in the image are emphasized by the histogram stretching, the edge extracting unit 106 may extract edge components necessary for lane recognition using the emphasized edge components.

A representative method of extracting edge components is a canny edge detector. The canny edge detector performs an image processing to shorten data while maintaining the structural characteristics of an image. The canny edge detector extracts the direction and intensity of edges using horizontal and vertical direction masks such as Sobel operator. Besides, the method of extracting edge components may be variously performed using Prewitt mask, Robert Mask, and Laplacian mask, and the operation performed in the edge extracting unit 106 is not limited to the above-mentioned method.

The lane recognizing unit 108 may recognize a lane by detecting straight-line components from the edge components extracted by the edge extracting unit 106.

As a method widely used to detect straight-line components, there is a method that performs a Hough transform with respect to edge components. To this end, a thinning process is first performed on the edge components extracted by the edge extracting unit 106 to simplify the computation of the Hough transform. Thereafter, a linear equation in two-dimensional image coordinates may be transformed into a parameter space of Rho ($\rho$) and Delta ($\theta$) using Hough transform with respect to edge components on which the thinning process has been performed. Since a linear equation in the two-dimensional image coordinates can be expressed as one point in the $\rho\theta$ parameter space, numerous straight lines passing through one point in the two-dimensional image coordinates may be expressed as one curve in the $\rho\theta$ parameter space. Accordingly, when coordinates of all points corresponding to the edge components are transformed into a $\rho\theta$ parameter space by the Hough transform, as many curves as the number of the edge components may be shown in the $\rho\theta$ parameter space. Since one curve in the $\rho\theta$ parameter space signifies numerous straight lines passing through one point corresponding to the edge components, an intersection point in which the largest number of curves of the $\rho\theta$ parameter space intersects may be found, and a straight line in two-dimensional image coordinates corresponding to $\rho$ and $\theta$ of the intersection point may be recognized as a lane.

In order to find the intersection point in which the largest number of curves of the $\rho\theta$ parameter space intersects, an accumulation array may be used. After $\theta$ values are designated in each row and $\rho$ values are designated in each column to form a two dimensional array, the values of arrays corresponding to curves of $\rho\theta$ parameter space may be increased by 1. Then, the value that each array has in the accumulation array become the number of curves in the $\rho\theta$ parameter space passing through $\rho$ and $\theta$. Since this means the number of edge components passing through a straight line of the image coordinates, the straight line of two-dimensional image coordinates corresponding to ρ and θ of the array having the largest values in the accumulation array may be recognized as a lane.

The lane type determining unit 110 may determine whether a lane recognized by the lane recognizing unit 108 is a solid line or a dotted line.

A process of determining the type of lane can be expressed as Equation (2):

$$line = (acc\_max > straight\_line\_th)?\ straight :$$
$$(acc1\_max < dotted\_line\_th)?\ dotted : straight \qquad \text{...(2)}$$

An array having the largest value is designated as acc_mas in the accumulation array. A predetermined first critical value meaning the number of edge components passing through the solid line is designated as straight-_line_ th, and a predetermined second critical value meaning the number of edge components passing through the dotted line is designated as dotted_line_th. Thereafter, acc_max is compared with straight_line_th and dotted_line_th. If acc_max is greater than straight_line_th, it is determined to be a solid line, and if acc_max is lower than the straight_line_th, it is determined to be a dotted line. As described above, since the value of each array in the accumulation array means the number of edge components passing through a straight line in the two-dimensional image coordinates, the type of lane can be determined by comparing the set critical value with acc_max, in consideration of a point that a larger number of edge components pass through a straight line than a dotted line in the case of a solid line.

Based on only straight_line_th as a critical value, if greater than straight_line_th, it may be determined to be a solid line, and if smaller than straight_line_th, it may be determined to be a dotted line. Also, dotted_line_th may be classified into a plurality of critical values such as dotted_line_th_1, dotted_line_th_2,...., dofted_line_th_n to more precisely determine.

The lane color detecting unit 111 may detect the color of the lane from an RGB signal value inputted by the image sensing unit 101.

RGB is a color model defining colors or a color display scheme. RGB may express colors by mixing three primary colors of light: red, green, and blue. Accordingly, since the color of one pixel on a screen can be made by a combination of red, green, and blue, the color of the lane may be determined by verifying whether the RGB signal value inputted by the image sensing unit 101 falls within a range of predetermined RGB critical values.

A process of determining the color of a lane can be expressed as Equation (3):

$$Cth\_1\_l < R < Cth\_1\_h$$
$$Cth\_1\_l < G < Cth\_1\_h$$
$$Cth\_1\_l < B < Cth\_1\_h = designated\_1\_color$$
$$\vdots \qquad \qquad \text{...(3)}$$
$$Cth\_N\_l < R < Cth\_N\_h$$
$$Cth\_N\_l < G < Cth\_N\_h$$
$$Cth\_N\_l < B < Cth\_N\_h = designated\_N\_color$$

For example, if designated_1_color is designated as yellow, the RGB color value of yellow is (255, 255, 0). Accordingly, when the red (R) value of the RGB signal value inputted by the image sensing unit 101 exists within a range from 245(Cth_1_l) to 255(Cth_1_h), the green (G) value exists within from a range 245(Cth_1_l) to 255(Cth_1_h), and the blue (B) value exists within from a range 0(Cth_1_l) to 10(Cth_1_h), the color of the lane may be determined to be yellow.

When the color of the lane is detected to be yellow through the above process, the lane departure determining unit 114 described below may effectively determine lane departure by recognizing the lane as a centerline.

The lane departure warning system 100 may further include an auto white balance applying unit 112 configured to apply Auto White Balance (AWB) to an image signal value inputted by the image sensing unit 101 before the lane color is detected by the lane color detecting unit 111.

Since a person has adaptability to color, a person cannot sense a difference of color in spite of change of illumination. However, a camera can sense a difference of color according to a change of illumination because the camera has no adaptability to color. Accordingly, AWB is applied to control a phenomenon that a camera senses a difference of lane color due to a sun or a headlight of a vehicle.

The lane pattern generating unit 113 may generate a lane pattern according to a lane shown on a display, based on the type and color of the lane recognized by the lane recognizing unit 108, the lane type determining unit 110, and the lane color detecting unit 111.

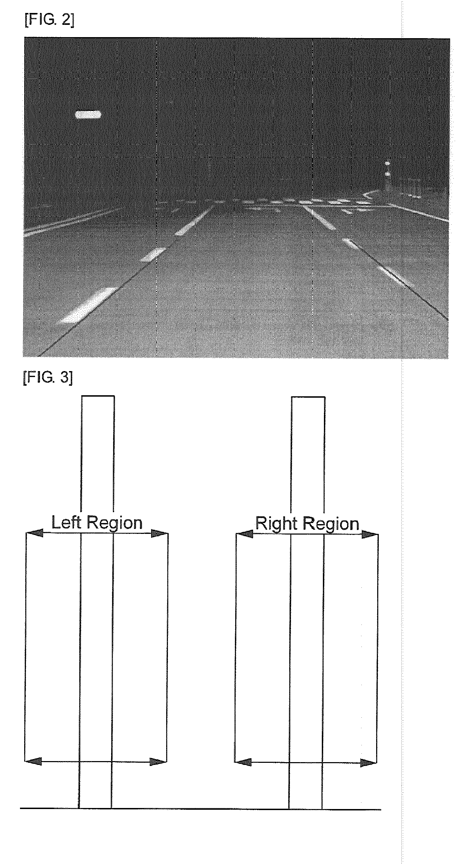

FIG. 2 is a view showing a lane pattern generated on a display of a user by the lane pattern generating unit 113. Referring to FIG. 2, the lane pattern generated on the display may be formed with the same color as the lane color detected by the lane color detecting unit 111. Also, the lane pattern may be formed with a dotted line such that a driver can easily recognize a lane-changeable region with his/her eyes. The lane pattern generating unit 113 may further perform blurring to remove a mosaic feeling of an image. Also, in order to distinguish the lane pattern generated on the display from an image shown on the display, the thickness of the lane pattern can be adjusted using Equation (4):

$$ left_{n-k} < line < Right_{n+k} \qquad \dots (4) $$

where n is center coordinates of the lane shown on the display, and k is a half the thickness to be adjusted. The thickness of the lane pattern generated on the user's display may have a value of 2k according to Equation (4).

The lane departure determining unit 114 may generate a warning sound that informs a driver of lane departure when a vehicle is departing from the lane, based on the recognized lane.

A solid line of the lanes indicates a lane change inhibition region, and a dotted line indicates a lane change allowance region. Accordingly, when the lane type determining unit 110 determines the line of the lane to be a solid line, and a vehicle approaches the line within a certain distance from the center of line, a warning sound is generated. On the other hand, it is assumed that the lane type determining unit 110 determines the line of the lane to be a dotted line. In this case, when it is verified that a turn signal lamp is on, a warning sound is not generated because it is recognized that a driver intends to change a lane although a vehicle approaches the line of the lane within a certain distance from the center of the line. However, if it is verified that the turn signal lamp is off, a warning sound is generated. When the line of the lane is recognized as a centerline by the lane color detecting unit 111 and a vehicle approaches the line within a certain distance from the center of the line, a warning sound is generated.

Thus, by designing a warning to be generated according to a solid line, a dotted line, and a centerline, safety of a driver can be effectively secured as compared to a typical lane departure warning system that generates a warning sound regardless of the type of the line.

The lane departure warning system 100 may further include a lane recognition region setting unit 107 configured to set a region necessary for lane recognition from edge components extracted by the edge extracting unit 106 before the lane is recognized by the lane recognizing unit 108.

FIG. 3 is a view showing an image set to a right region and a left region according to a lane recognition region setting unit 107.

The edge components extracted by the edge extracting unit 106 may be largely divided into edge components regarding a left line and edge components regarding a right line, based on a vehicle. Specifically, a left region may be set by setting a left/right limit line having a certain width, based on the edge components regarding the left line, and a right region may be set by setting a left/right limit line having a certain width, based on the edge component regarding the right line.

Thus, if an image including extracted edge components is set as the left region and the right region and lane recognition is then performed only on the set regions, an operation process on edge components of the front part of a vehicle unnecessary for determination of lane departure may be omitted, and lane recognition may be more effectively and exactly performed.

When the image is set as the left region and the right region, the lane recognition region setting unit 107 may further set an angle limit line at a certain angle or more, base on a horizontal axis with respect to edge components corresponding to the lane.

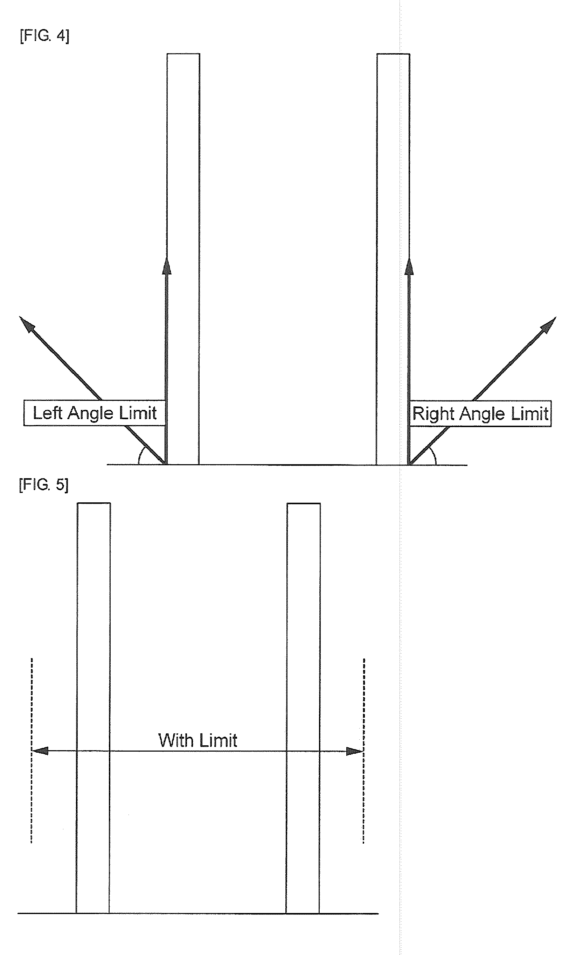

FIG. 4 is a view showing angle limit lines set at a certain angle or more, based on a horizontal axis with respect to an edge component according to a lane recognition region setting unit 107. Referring to FIG. 4, the lane recognition region setting unit 107 may set a certain or more angle having a minus (-) value, based on the horizontal axis with respect to the edge components corresponding to the left line, and may set a certain or more angle having a plus (+) value with respect to the edge components corresponding to the right line.

The reason why the angle limit lines at a certain angle or more is set with respect to the edge components based on the horizontal axis is that it is unnecessary to calculate edge components within the angle limit line to which a vehicle cannot progress, using the characteristics of a vehicle that cannot turn around at an angle of about 90 degrees.

Thus, since extraction of straight lines adjacent to the horizontal components unnecessary for determination of lane departure can be restricted, lane recognition can be more effectively and exactly performed.

The lane departure warning system 100 may further include a lane recognition error preventing unit 109 configured to control the lane recognizing unit 108 to again recognize lane when failing to recognize the lane due to a failure of the lane recognizing unit 108

FIG. 5 is a view showing a distance limit line set by a lane recognition error preventing unit 109. Referring to FIG. 5, the lane recognition error preventing unit 109 may set the distance limit line in consideration of a width between the left line and the right line of the lane and a margin. The width between the left line and the right line recognized by the lane recognizing unit 108 is obtained, and then, the width is compared with the distance limit line. When the width between the left line and the right line recognized by the lane recognizing unit 108 exceeds the distance limit line, the lane recognition error preventing unit 109 determines it as a failure of the lane recognizing unit 108, and controls the lane recognizing unit 108 to again recognize the lane. The fact that the width between the left line and the right line recognized by the lane recognizing unit 108 exceeds the distance limit line means that an improbable width has been obtained between the left line and the right line, which can be determined as failure of the lane recognizing unit 108.

Thus, by designing to prevent the failure of the lane recognizing unit 108 through setting of the distance limit line, it is possible to provide a more reliable lane recognition as compared to a typical lane departure warning system.

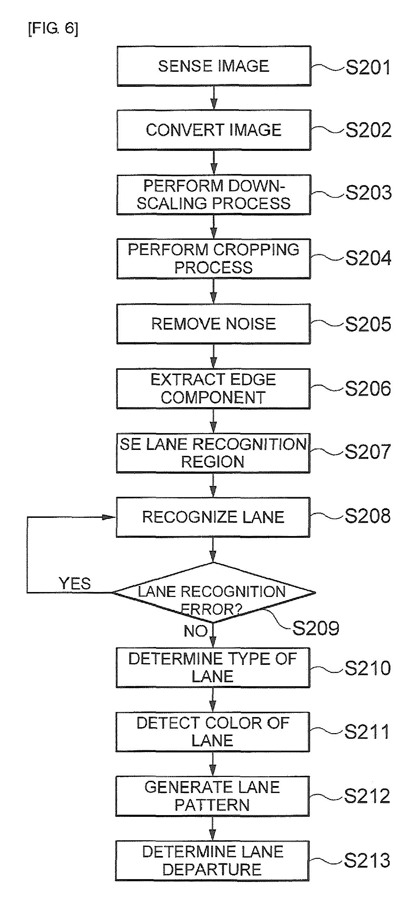

Hereinafter, a lane departure warning method using the lane departure warning system will be described in detail with reference to FIG. 6.

FIG. 6 is a flowchart showing a lane departure warning method using a lane departure warning system. Referring to Fig. 6, a plurality of images continuously photographed by a camera are sensed (S201).

After the sensing of the images, an RGB image inputted from the camera may be additionally converted into an image of YCbCr color space (S202).

A scaling process may be additionally performed to control the quality of the image converted by the conversion of the image (S203).

A cropping process may be additionally performed on a region where a lane exists among the image downscaled by the scaling process (S204).

Components acting as noise during lane recognition may be additionally filtered from the image cropped by the cropping process (S205).

If the image is inputted according to the sensing of the image (S201), edge components necessary for the lane recognition are emphasized and extracted (S206).

If the edge components are extracted by the extracting of the edge components (S206), a lane is recognized by detecting straight-line components from the extracted edge components (S208).

Thereafter, the type of the lane is determined by the lane recognized according to the recognizing of the lane (S210).

If the type of the lane is determined according to the determining of the type of the lane (S210), the color of the lane may be detected from an image signal value inputted by the image sensing unit 101 (S211).

Based on the type and color of the lane that are recognized by steps S208, S210, and S211, a lane pattern is generated according to the lane shown on a display (S212).

If the generating of the lane pattern is performed, it is verified whether a vehicle approaches the line of the lane and whether turn signal lamps are on or off, and then it is determined whether the vehicle departs from the lane (S213).

On the other hand, before the lane is recognized by the lane recognizing unit 108, a region necessary for lane recognition may be additionally set from the edge components extracted by the edge extracting unit 106 (S207).

Also, after the setting of the region for lane recognition (S207), it may be determined whether the lane is incorrectly recognized due to a failure of the lane recognizing unit 108 (S209). If it is determined in step S209 that the lane has been incorrectly recognized, the procedure proceeds to step S208.

According to a lane departure warning system and method, since it is not necessary to analyze a region where unnecessary edge components exists in determining lane departure, reliability of a means for recognizing a lane can increase.

Also, the lane departure warning system and method can perform more efficient lane departure warning by determining lane departure using the type and color of a lane.

As described above, although the preferable embodiments of the present invention have been shown and described, it will be appreciated by those skilled in the art that substitutions, modifications and variations may be made in these embodiments without departing from the principles and spirit of the general inventive concept, the scope of which is defined in the appended claims and their equivalents.

**Claims**

1. A lane departure warning system, which comprises:

an image sensing unit configured to sense a plurality of images continuously photographed by a camera;
an edge extracting unit configured to emphasize edge components necessary for lane recognition from the image inputted by the image sensing unit and extract the emphasized edge components;
a lane recognizing unit configured to detect straight-line components from the extracted edge components and recognize the detected straight-line components as a lane;
a lane type determining unit configured to determine a type of the lane using the recognized lane;
a lane color detecting unit configured to detect a color of the lane from an image signal value inputted by the image sensing unit;
a lane pattern generating unit configured to generate a lane pattern according to the lane shown on a display, based on the type and the color of the recognized lane; and
a lane departure determining unit configured to determine lane departure in consideration of the type and the color of the lane and a state of a turn signal lamp.

2. The lane departure warning system according to Claim 1, which further comprises a lane recognition region setting unit configured to set a region necessary for the lane recognition from the edge components extracted by the edge extracting unit before the lane is recognized by the lane recognizing unit.

3. The lane departure warning system according to Claim 2, wherein the lane recognition region setting unit sets a left and right limit line having a certain width to set a left region and a right region, based on edge components regarding a left line and edge components regarding a right line that are extracted by the edge extracting unit, and the lane recognition region setting unit sets an angle limit line at a certain angle or more, based on a horizontal axis with respect to edge components corresponding to the lane.

4. The lane departure warning system according to Claim 1, which further comprises a lane recognition error preventing unit configured to control the lane recognizing unit to again recognize the lane when the lane is incorrectly recognized due to a failure of the lane recognizing unit, wherein the lane recognition error preventing unit is configured to obtain widths of the left line and the right line recognized by the lane recognizing unit and compare the widths with a predetermined distance limit line

5. The lane departure warning system according to Claim 1, which further comprises an image converting unit configured to convert an RGB image inputted by the image sensing unit into an image of a YCbCr color space; a scaling unit configured to perform a down-scaling process to adjust a quality of the image converted by the image converting unit; and a cropping unit configured to perform a cropping process on a region of the down-scaled image where the lane exists.

6. The lane departure warning system according to Claim 5, which further comprises a noise removing unit configured to filter components acting as noise during the lane recognition from the image cropped by the cropping unit.

7. The lane departure warning system according to Claim 1, wherein the lane type determining unit compares a value of an array having a largest value among an accumulation array with a predetermined critical value.

8. The lane departure warning system according to Claim 1, wherein the lane color detecting unit verifies whether the image signal value inputted by the image sensing unit falls within a range of predetermined critical values.

9. The lane departure warning system according to Claim 1, which further comprises an auto white balance applying unit configured to apply auto white balance (AWB) to the image signal value inputted by the image sensing unit before the color of the lane is detected by the lane color detecting unit.

10. A lane departure warning method, which comprises:

(A) sensing a plurality of images continuously photographed by a camera;
(B) emphasizing edge components necessary for lane recognition from the image inputted by sensing of the image and extracting the emphasized edge components;
(C) detecting straight-line components from the extracted edge components and recognizing the detected straight-line components as a lane;

(D) determining a type of the lane using the lane recognized by the recognition of the lane;

(E) detecting a color of the lane from an image signal value inputted by sensing of the image;

(F) generating a lane pattern according to the lane shown on a display, based on the type and the color of the recognized lane; and

(G) determining lane departure in consideration of the type and the color of the lane and a state of a turn signal lamp.

11. The lane departure warning method according to Claim 10, which further comprises setting a region necessary for the lane recognition from the edge components extracted by the extracting of the edge components before the recognizing of the lane.

12. The lane departure warning method according to Claim 10, which further comprises determining whether the lane is incorrectly recognized due to a failure of the lane recognizing unit after the recognizing of the lane, wherein when it is determined that the lane has been incorrectly recognized, the recognizing of the lane is performed.

13. The lane departure warning method according to Claim 10, which further comprises converting an RGB image inputted from the camera into an image of a YCbCr color space after the sensing of the plurality of images.

14. The lane departure warning method according to Claim 13, which further comprises performing a down-scaling process to adjust a quality of the image converted by the converting of the RGB image; performing a cropping process on a region of the down-scaled image where the lane exists; and filtering components acting as noise during the lane recognition from the cropped image.

[FIG. 1]

CAMERA

LANE DEPARTURE WARNING SYSTEM — 100

IMAGE SENSING UNIT — 101

IMAGE CONVERTING UNIT — 102

SCALING UNIT — 103

CROPPING UNIT — 104

NOISE REMOVING UNIT — 105

EDGE EXTRACTING UNIT — 106

LANE RECOGNITION REGION SETTING UNIT — 107

LANE RECOGNIZING UNIT — 108

LANE RECOGNITION ERROR PREVENTING UNIT — 109

LANE TYPE DETERMINING UNIT — 110

112

AWB APPLYING UNIT

LANE COLOR DETECTING UNIT — 111

LANE PATTERN GENERATING UNIT — 113

LANE DEPARTURE DETERMINING UNIT — 114

12

[FIG. 4]

Left Angle Limit

Right Angle Limit

[FIG. 5]

With Limit

[FIG. 6]

SENSE IMAGE — S201

↓

CONVERT IMAGE — S202

↓

PERFORM DOWN-SCALING PROCESS — S203

↓

PERFORM CROPPING PROCESS — S204

↓

REMOVE NOISE — S205

↓

EXTRACT EDGE COMPONENT — S206

↓

SE LANE RECOGNITION REGION — S207

↓

RECOGNIZE LANE — S208

↓

LANE RECOGNITION ERROR? — S209

YES → (back to RECOGNIZE LANE)

NO ↓

DETERMINE TYPE OF LANE — S210

↓

DETECT COLOR OF LANE — S211

↓

GENERATE LANE PATTERN — S212

↓

DETERMINE LANE DEPARTURE — S213

## EP 2 477 139 A2

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020100131452